# EUROPEAN PATENT SPECIFICATION

(11) **EP 0 946 470 B1**
(45) Date of publication and mention of the grant of the patent: **02.01.2004**
(21) Application number: 97910068.2
(22) Date of filing: 06.10.1997
(51) Int. Cl.: C07C 7/20, C08K 5/04, E21B 37/06, C10L 3/00, C10L 3/06, C10L 1/14

(54) **A METHOD FOR PREVENTING OR RETARDING THE FORMATION OF GAS HYDRATES**
EIN VERFAHREN ZUR VERMEIDUNG ODER HEMMUNG VON GASHYDRATEN
PROCEDE VISANT A EMPECHER OU A RETARDER LA FORMATION D'HYDRATES DE GAZ

(30) Priority: 06.11.1996 US 743696; 13.08.1997 US 910128
(43) Date of publication of application: 06.10.1999
(73) Proprietor: ISP INVESTMENTS INC., Wilmington, Delaware 19801 (US)
(72) Inventor: COHEN, Jeffrey, M., Fairlawn, NL 07410 (US); WOLF, Philip, F., Bridgewater, NJ 08807 (US); YOUNG, William, D., Cedar Grove, NJ 07009 (US)
(74) Representative: Harrison, David Christopher
(86) International application number: PCT/US1997/018349
(87) International publication number: WO 1998/019980

(56) References cited:
- WO-A-95/32356
- WO-A-96/08456
- WO-A-96/41785
- US-A- 4 302 220

## Description

The invention relates to a composition and method for preventing or retarding the formation of gas hydrates or for reducing the tendency of such hydrates to agglomerate during the transport of a fluid comprising water and a hydrocarbon through a conduit, and, more particularly, to the addition of a mixture of a polyvinyl pyrrolidone or caprolactam polymer and an alcohol or a glycol ether to the fluid to inhibit such gas hydrate formation.

It is well known in the art that the formation of gas hydrates in a conduit, e.g. a pipeline, during the transport of liquids, such as oil, and gases, particularly lower hydrocarbons, e.g. methane, ethane, propane, butane, isobutane and natural gas is a serious problem, especially in areas with a low temperature in the winter season or in the sea. Generally the temperatures are so low that gas hydrate formation, due to the inevitable presence of co-produced water in the wells takes place, if no special steps are taken. Insulation decreases the chance of gas hydrate formation; however, if the field is relatively small and far away from the production platform, the costs of using insulation are too high to make such field economically attractive. It is also known to add anti-freeze compounds, for example, glycol or methanol, during transport to minimize gas hydrate formation; however, large quantities of these compounds are required to be effective which is expensive. Alkyl glycosides also have been used for this purpose.

A representation of the prior art in this field are the following patents: U.S. Pats. 5,420,370; 5,432,292; 4,915,176; EPA 0526929A1; EPO 0323774A1; Can. Pat. Appln 2,073,577; WO 93/25798; WO 95/17579; Gas Hydrates and Hydrate Prevention 73 GPA Annual Convention, pgs 85-93; WO 96/08456; WO 96/08636; WO 93/25798; EPA 0457375A1; WO 9412761.

WO 95/32356 discloses use of a primary additive which is selected from a vast range of compounds including both polymeric and monomeric compounds to prevent clathrate hydrate formation. Polymers formed by polymerising or copolymerising one or more N-vinyl lactam monomers are disclosed. A second additive may be included and the second additive is selected from C₁-C₅ mono- or poly-hydric alcohols or compounds having a nitrogen based linkage. Of the alcohols, methanol is preferred.

WO 96/08456 discloses use of a mixture of a water soluble polymer with a second additive selected from ionic or non-ionic compounds having a polar part and a non-polar part with the non-polar part having an alkyl, alkenyl or alkynyl group with 12 or fewer carbon atoms to inhibit formation of clathrate hydrates. Methanol is a possible second additive.

WO 96/41785 discloses use of N-methyl-N-vinylacetamide (VIMA) copolymers as hydrate formation inhibitors. An alcohol solution of the copolymer may be used.

### SUMMARY OF THE INVENTION

What is described herein is a composition for effectively preventing or retarding the formation of gas hydrates, or for reducing the tendency of gas hydrates to agglomerate, during the transport of a fluid comprising water and a hydrocarbon, through a conduit, comprising, (a) a polymer or copolymer, which is (1) a terpolymer of vinyl pyrrolidone, vinyl caprolactam and an ammonium derivative monomer having from 6 to 12 carbon atoms, selected from the group consisting of dialkyl aminoalkyl methacrylamide, dialkyl dialkenyl ammonium halide and a dialkylamino alkyl acrylate or methacrylate, (2) a copolymer of vinyl pyrrolidone and vinyl caprolactam or (3) a vinyl caprolactam homopolymer, and (b) an alcohol containing three to five carbon atoms and one hydroxy group, or a glycol ether having a molecular weight not greater than the molecular weight of di(ethylene glycol) monobutyl ether (162) and containing an alkoxy group having at least 3 carbon atoms.

In one embodiment of the invention, the polymer component of the inhibitor composition is a terpolymer of vinyl pyrrolidone, vinyl caprolactam and a dialkylaminoalkyl acrylate or methacrylate.

### DETAILED DESCRIPTION OF THE INVENTION

Suitable terpolymers for use in the composition of the invention are described in detail by Lorenz et al. in U.S. Pat. 4,521,404. A preferred terpolymer is Gaffix® VC-713, which is sold by International Specialty Products, Wayne, New Jersey. Gaffix® VC-713 is a terpolymer of 17-32% vinyl pyrrolidone, 65-80% vinyl caprolactam and 3-6% dimethylaminoethyl methacrylate, by weight.

Another preferred polymer which exhibits inhibitory characteristics in the composition of the invention is a homopolymer of vinyl caprolactam (VCL).

Generally, the polymer is used in an amount of 30 to 50% by weight of the composition, i.e. in admixture with the alcohol or glycol ether solvent. The polymer inhibition concentration in the pipeline, i.e. the aqueous phase is 0.1 to 3% by weight; the solvent inhibition concentration accordingly, is 0.1 to 5% by weight in the aqueous phase.

Alcohols which are effective in providing the advantageous gas hydrate inhibition contain one hydroxy group and three to five carbon atoms. Representative alcohols are 1-pentanol; 1-butanol, also known as n-butyl alcohol; 2-methyl-2-propanol, also known as tert-butyl alcohol; 2-butanol, also known as sec-butyl alcohol; 2-propanol, also known as isopropyl alcohol; and 1-propanol, also known as propyl alcohol.

Glycol ethers having a molecular weight not greater than the molecular weight of di(ethylene glycol) monobutyl ether and which are effective in providing the advantageous gas hydrate inhibition contain an alkoxy group having at least 3 carbon atoms. Representative glycol ethers are butyl cellosolve, which is ethylene glycol monobutyl ether; propylene glycol butyl ether; butyl carbitol or di(ethylene glycol) monobutyl ether; and 2-isopropoxy-ethanol.

The following examples are provided to illustrate the invention.

### GENERAL METHOD

The gas hydrate inhibition tests were conducted in a 300 ml stainless steel stirred autoclave at high pressure and low temperature. In a typical experiment, 0.25 to 1.0 wt% of the inhibitor composition was added to 120 g of a 3.5 wt% sea salt solution. The resulting mixture was transferred to the 300 ml autoclave and immersed in a constant temperature bath at 4°C. The pressure was then increased to 6.89 x 10⁶ Pa (1000 psig) with green canyon gas and held constant to within 3.45 x 10⁴ Pa (5 psi)throughout the experiment with a programmable syringe pump. After the pressure reached 6.89 x 10⁶ Pa (1000 psig) the autoclave stirrer was turned on to 1000 rpm. The gas volume, as measured by the syringe pump, the gas pressure, and the fluid temperature were measured and electronically recorded at 1 minute intervals throughout the experiment. Gas consumption indicates hydrate formation.

The results are shown below in Tables 1 and 2. An extended inhibition time e.g. 350 minutes or greater, preferably 500 to > 1200, is indicative of a composition which provides the desired gas hydrate inhibition. Standard and comparative results are shown in Tables 3 and 4.

**TABLE 1**

| Composition | | Inhibition Time (min) |
|---|---|---|
| Polymer * | Solvent** | |
| Gaffix® VC-713 | 1-pentanol | 300 |
| Gaffix® VC-713 | n-butyl alcohol | 400 |
| Gaffix® VC-713 | sec-butyl alcohol | 700 |
| Gaffix® VC-713 | tert-butyl alcohol | 400 |
| Gaffix® VC-713 | propyl alcohol | 600 |
| Gaffix® VC-713 | isopropyl alcohol | 250 |
| PVCL | sec-butyl alcohol | 540 |
| VP/VCL (50:50) | sec-butyl alcohol | 450 |

| | | |
|---|---|---|
| * 0.5 wt% | | |
| ** 0.75 wt% | | |

**TABLE 2**

| Composition | | Inhibition Time (min) |
|---|---|---|
| Polymer* | Solvent** | |
| Gaffix® VC-713 | Butyl Cellosolve | > 1200 |
| VCL | Butyl Cellosolve | > 1200 |
| Gaffix® VC-713 | 2-Isopropoxy ethanol | 800 |
| Gaffix® VC-713 | Butyl Carbitol | 500 |
| Gaffix® VC-713 | propylene glycol propyl ether | 600 |
| Gaffix® VC-713 | propylene glycol butyl ether | 450 |
| Gaffix® VC-713 | ethylene glycol monopropyl ether | 350 |
| VP/VCL (50:50) | Butyl Cellosolve | 350 |

| | | |
|---|---|---|
| * 0 . 5 wt% | | |
| ** 0.75 wt% | | |

**TABLE 3**

| | | |
|---|---|---|
| None | None | 0 |
| None | n-butyl alcohol | 0 |
| Gaffix® VC-713 | None | 2 |
| Gaffix® VC-713 | Methanol | 5 |
| Gaffix® VC-713 | Ethanol | 20 |
| VCL | Methanol | 0 |
| VCL/VP | Methanol | 0 |

**TABLE 4**

| | | |
|---|---|---|
| None | None | 0 |
| None | Butyl Cellosolve | 0 |
| Gaffix® VC-713 | None | 2 |
| Gaffix® VC-713 | Ethanol | 43 |
| VCL | Methanol | 0 |
| VCL/VP | Methanol | 0 |
| Ganex® P904 | Butyl Cellosolve | 50 |
| Gaffix® VC-713 | Carbitol | 0 |
| Gaffix® VC-713 | Cellosolve | 10 |

## Claims

1. A composition for preventing or retarding the formation of gas hydrates or for reducing the tendency of gas hydrates to agglomerate, during the transport of a fluid comprising water and a hydrocarbon, through a conduit, comprising, (a) a polymer or copolymer which is (1) a terpolymer of vinyl pyrrolidone, vinyl caprolactam and an ammonium derivative monomer having from 6 to 12 carbon atoms, selected from the group consisting of dialkyl aminoalkyl methacrylamide, dialkyl dialkenyl ammonium halide and a dialkylamino alkyl acrylate or methacrylate, (2) a copolymer of vinyl pyrrolidone and vinyl caprolactam, or (3) a homopolymer of vinyl caprolactam; and (b) an alcohol containing three to five carbon atoms and one hydroxy group, or a glycol ether having a molecular weight not greater than the molecular weight of di(ethylene glycol) monobutyl ether and containing an alkoxy group having at least 3 carbon atoms.

2. A composition according to claim 1 wherein said terpolymer includes an ammonium derivative monomer which is dimethylaminoethyl methacrylate.

3. A composition according to claim 1 wherein said terpolymer comprises, by weight, 17-32% vinyl pyrrolidone, 65-80% vinyl caprolactam and 3-6% of said ammonium derivative monomer.

4. A composition according to claim 1 wherein said copolymer comprises vinyl pyrrolidone and vinyl caprolactam, or a homopolymer of vinyl caprolactam.

5. A composition according to claim 1 wherein said glycol ether is ethylene glycol monobutyl ether, di(ethylene glycol) monobutyl ether, 2-isopropoxyethanol, propylene glycol propyl ether, propylene glycol butyl ether, or ethylene glycol monopropyl ether.

6. A composition according to claim 1 wherein said alcohol is propyl alcohol, sec-butyl alcohol, n-butyl alcohol, tert-butyl alcohol, isopropyl alcohol, or 1-pentanol.

7. A composition according to claim 1 wherein said polymer comprises 30 to 50% by weight of said composition.

8. A method of preventing or retarding the formation of gas hydrates or for reducing the tendency of gas hydrates to agglomerate, during the transport of a fluid comprising water and a hydrocarbon, through a conduit which comprises including a composition comprising (a) a polymer or copolymer which is (1) a terpolymer of vinyl pyrrolidone, vinyl caprolactam and an ammonium derivative monomer having from 6 to 12 carbon atoms, selected from the group consisting of dialkyl aminoalkyl methacrylamide, dialkyl dialkenyl ammonium halide and a dialkylamino alkyl acrylate or methacrylate, (2) a copolymer of vinyl pyrrolidone and vinyl caprolactam, or (3) a homopolymer of vinyl caprolactam, and (b) an alcohol containing three to five carbon atoms and one hydroxy group, or a glycol ether having a molecular weight not greater than the molecular weight of di(ethylene glycol) monobutyl ether and containing an alkoxy group having at least 3 carbon atoms to said fluid.

## Patentansprüche

1. Zusammensetzung zur Verhinderung oder Verzögerung der Bildung von Gashydraten oder zur Verringerung der Tendenz von Gashydraten zur Agglomeration während des Transports eines Fluids, das Wasser und einen Kohlenwasserstoff umfasst, durch eine Leitung, umfassend (a) ein Polymer oder Copolmyer, das (1) ein Terpolymer aus Vinylpyrrolidon, Vinylcaprolactam und einem Ammoniumderivat-Monomer mit 6 bis 12 Kohlenstoffatomen, ausgewählt aus der aus Dialkylaminoalkylmethacrylamid, Dialkyldialkenylammoniumhalogenid und einem Dialkylaminoalkylacrylat oder -methacrylat bestehenden Gruppe, (2) ein Copolymer von Vinylpyrrolidon mit Vinylcaprolactam oder (3) ein Homopolymer von Vinylcaprolactam ist, und (b) einen Alkohol, der drei bis fünf Kohlenstoffatome und eine Hydroxygruppe enthält, oder einen Glykolether, der ein Molekulargewicht aufweist, das nicht über dem Molekulargewicht von Di(ethylenglykol)-monobutylether liegt, und eine Alkoxygruppe mit zumindest 3 Kohlenstoffatomen enthält.

2. Zusammensetzung nach Anspruch 1, worin das Terpolymer ein Ammoniumderivat-Monomer umfasst, das Dimethylaminoethylmethacrylat ist.

3. Zusammensetzung nach Anspruch 1, worin das Terpolymer 17 bis 32 Gew.-% Vinylpyrrolidon, 65 bis 80 Gew.-% Vinylcaprolactam und 3 bis 6 Gew.-% des Ammoniumderivat-Monomers umfasst.

4. Zusammensetzung nach Anspruch 1, worin das Copolymer Vinylpyrrolidon und Vinylcaprolactam oder ein Homopolymer von Vinylcaprolactam umfasst.

5. Zusammensetzung nach Anspruch 1, worin der Glykolether Ethylenglykolmonobutylether, Di(ethylenglykol)monobutylether, 2-Isopropoxyethanol, Propylenglykolpropylether, Propylenglykolbutylether oder Ethylenglykolmonopropylether ist.

6. Zusammensetzung nach Anspruch 1, worin der Alkohol Propylalkohol, sec-Butylalkohol, n-Butylalkohol, t-Butylalkohol, Isopropylalkohol oder 1-Pentanol ist.

7. Zusammensetzung nach Anspruch 1, worin das Polymer 30 bis 50 Gew.-% der Zusammensetzung umfasst.

8. Verfahren zur Verhinderung oder Verzögerung der Bildung von Gashydraten oder zur Verringerung der Tendenz von Gashydraten zur Agglomeration während des Transports eines Fluids, das Wasser und einen Kohlenwasserstoff umfasst, durch eine Leitung, umfassend das Aufnehmen einer Zusammensetzung, umfassend (a) ein Polymer oder Copolymer, das (1) ein Terpolymer aus Vinylpyrrolidon, Vinylcaprolactam und einem Ammoniumderivat-Monomer mit 6 bis 12 Kohlenstoffatomen, ausgewählt aus der aus Dialkylaminoalkylmethacrylamid, Dialkyldialkenylammoniumhalogenid und einem Dialkylaminoalkylacrylat oder -methacrylat bestehenden Gruppe, (2) ein Copolymer von Vinylpyrrolidon mit Vinylcaprolactam oder (3) ein Homopolymer von Vinylcaprolactam ist, und (b) einen Alkohol, der drei bis fünf Kohlenstoffatome und eine Hydroxygruppe enthält, oder einen Glykolether, der ein Molekulargewicht aufweist, das nicht über dem Molekulargewicht von Di(ethylenglykol)monobutylether liegt, und eine Alkoxygruppe mit zumindest 3 Kohlenstoffatomen enthält.

## Revendications

1. Composition pour prévenir ou retarder la formation d'hydrates de gaz ou pour réduire la tendance d'hydrates de gaz à s'agglomérer, pendant le transport d'un fluide comprenant de l'eau et un hydrocarbure, à travers un conduit, comprenant, (a) un polymère ou copolymère qui est (1) un terpolymère de vinyl pyrrolidone, vinyl caprolactame et un monomère dérivé d'ammonium ayant de 6 à 12 atomes de carbone, sélectionné dans le groupe consistant en dialkyl aminoalkyl méthacrylamide, halogénure de dialkyl dialcényl ammonium et dialkylamino alkyl acrylate ou méthacrylate, (2) un copolymère de vinyl pyrrolidone et vinyl caprolactame, ou (3) un homopolymère de vinyl caprolactame, et (b) un alcool contenant trois à cinq atomes de carbone et un groupe hydroxy, ou du glycol éther ayant un poids moléculaire ne dépassant pas le poids moléculaire dudit éthylène glycol monobutyl éther et contenant un groupe alcoxy ayant au moins 3 atomes de carbone.

2. Composition selon la revendication 1 où ledit terpolymère contient un monomère dérivé d'ammonium qui est diméthylaminoéthyl méthacrylate.

3. Composition selon la revendication 1 où ledit terpolymère comprend, en poids, 17-32% de vinyl pyrrolidone, 65-80% de vinyl caprolactame et 3-6% dudit monomère dérivé d'ammonium.

4. Composition selon la revendication 1 où ledit copolymère comprend de la vinyl pyrrolidone et du vinyl caprolactame ou un homopolymère de vinyl caprolactame.

5. Composition selon la revendication 1, où ledit glycol éther est éthylène glyol monobutyl éther, di(éthylène glycol) monobutyl éther, 2-isopropoxyéthanol, propylène glycol propyl éther, propylène glycol butyl éther, ou éthylène glycol monopropyl éther.

6. Composition selon la revendication 1 où ledit alcool est l'alcool propylique, l'alcool butylique secondaire, l'alcool n-butylique, l'alcool butylique tertiaire, l'alcool isopropylique, ou le 1-pentanol.

7. Composition selon la revendication 1 où ledit polymère forme 30 à 50% en poids de ladite composition.

8. Méthode pour prévenir ou retarder la formation d'hydrates de gaz ou pour réduire la tendance d'hydrates de gaz à s'agglomérer, pendant le transport d'un fluide comprenant de l'eau et un hydrocarbure, à travers un conduit, qui consiste à inclure une composition comprenant (a) un polymère ou copolymère qui est (1) un terpolymère de vinyl pyrrolidone, vinyl caprolactame et un monomère dérivé d'ammonium ayant de 6 à 12 atomes de carbone, sélectionné dans le groupe consistant en dialkyl aminoalkyl méthacrylamide, halogénure de dialkyl dialcényl ammonium et un dialkylamino alkyl acrylate ou méthacrylate, (2) un copolymère de vinyl pyrrolidone et vinyl caprolactame, ou (3) un homopolymère de vinyl caprolactame, et (b) un alcool contenant trois à cinq atomes de carbone et un groupe hydroxy, ou un glycol éther ayant un poids moléculaire pas plus grand que le poids moléculaire du di(éthylène glycol) monobutyl éther contenant un groupe alcoxy ayant au moins 3 atomes de carbone, audit fluide.
